Europäisches Patentamt

(19) European Patent Office

Office européen des brevets

(11) Publication number: **0 279 197**
**A2**

# (12) EUROPEAN PATENT APPLICATION

(21) Application number: 88100761.1

(51) Int. Cl.⁴ **C08L 71/04** , C08L 77/00

(22) Date of filing: **20.01.88**

(30) Priority: **17.02.87 US 15264**

(43) Date of publication of application:
**24.08.88 Bulletin 88/34**

(84) Designated Contracting States:
**DE FR GB IT NL**

(71) Applicant: **GENERAL ELECTRIC COMPANY**
**1 River Road**
**Schenectady New York 12305(US)**

(72) Inventor: **Abolins, Visvaldis**
**15 Haddington Lane**
**Delmar New York 12054(US)**

(74) Representative: **Catherine, Alain et al**
**General Electric France Service de Propriété**
**Industrielle 18 Rue Horace Vernet B.P. 76**
**F-92134 Issy-les-Moulineaux Cédex(FR)**

(54) Polyphenylene ether compositions having improved adhesion to epoxy resins.

(57) The adhesion of molded polyphenylene ether resin or polyphenylene ether resin or polyphenylene ether polystyrene resin compositions can be improved by incorporation of approximately 1 to 15 parts by weight per 100 parts molding resin of a polyamide additive which may be a polyamide resin such as nylon 6, or a compatibilized PPE-polyamide blend.

EP 0 279 197 A2

# POLYPHENYLENE ETHER COMPOSITIONS HAVING IMPROVED ADHESION TO EPOXY RESINS

## Field of the Invention

Molded polyphenylene ether compositions will exhibit improved adhesion to epoxy resins by including in the formulation effective amounts of a polyamide component or preferably a compatibilized blend of a polyamide resin and a polyphenylene ether resin.

## Background of the Invention

Thermoplastic polyphenylene ether molding compositions have long been known for a variety of useful applications in the electrical industries. In particular, polyphenylene ether resins are known to be alloyable in virtually all proportions with alkenyl aromatic polymers such as high impact polystyrene and provide a variety of useful molding compositions.

Certain complicated electrical wiring devices including those known as bobbins require support parts of molded thermoplastic. After being wired with electrical components, the support parts are often encapsulated in thermosetting or curable epoxy resin compositions in order to protect the delicate wiring and to eliminate electrical failures. The epoxy resin acts as an electrical insulator between wires carrying various electrical charges. It is essential that the thermoplastic composite for the support parts be firmly bonded to the epoxy in order to avoid arcing or gradual discharge which may result in electrical degration.

The interfacial adhesion between a polyphenylene ether molding composition and a curable epoxy resin can be influenced by several factors. The bond strength as measured in a lap-shear strength test can be influenced by the various types of epoxy potting compounds which may be utilized. Epoxy resins utilizing an anhydride curing system at different temperatures can also have an effect on the bond strength. Another factor can be additives such as phosphate flame retardants which may be present in conventional polyphenylene ether molding compositions. Environmental effects may also play a role. For example, minute oily deposits from an operator's fingers can lower the required bond strength.

Since there are numerous factors which may affect the adhesive bond between a polyphenylene ether composition and an epoxy resin and since these factors are difficult to control even after they are identified, it is critically important to provide polyphenylene ether molding compositions which will exhibit improved adhesion towards the epoxy resins under a variety of circumstances.

Polyphenylene ethers are relatively non-polar materials whereas epoxy resins are known to be more polar. The adhesion problems between two such substrates can be improved by incorporating a polar additive in the polyphenylene ether composition. Polyamide resins typically have a high polarity which can be used to good advantage in this regard. As with any additive, however, it is important to balance an improvement in one physical property (such as adhesion) against decreases in other properties (such as impact or tensile strength).

For this reason it is especially prepared to utilized the so-called compatibilized PPE-PA resins as the polyamide component additive in composition of the present invention. Use of compatibilized PPE-polyamides allows for efficient incorporation and utilization of effective amounts of polyamide resin additive with a minimum of deleterious effects on other properties.

Compatibilized PPE-PA compositions appear to be most desirable for the purpose of improving the polyphenylene ether molding composition due to their affinity towards traditional polyphenylene ether molding compositions and composites.

Compatabilized PPE-PA compositions which may be useful as the polyamide component in compositions of the present invention are a class of PPE compounds described in numerous patents and publications including those discussed below. Polyphenylene ethers and polyamide resins are ordinarily incompatible at many concentrations. When the polyamide component is greater than about 30 weight percent a phase inversion occurs whereby the polyamide is in a continuous phase and the polyphenylene ether is dispersed throughout in a discontinuous phase. Unless the compatibility of the discrete phases can be improved by physical or chemical means, such compositions will remain relatively incompatible and will suffer from a number of deficiencies in physical properties, notably impact strength. The prior art has shown several ways for improving the compatibility between the polyphenylene ether and polyamide components, thereby providing compatabilized PPE-PA products. For example, in U.S. 3,379,792, the processability of polyphenylene ether resins has been improved by blending with 0.1 to 25 percent by weight of a polyamide. In U.S. 4,315,086, polyphenylene ether blends having improved chemical resistance are provided by combining PPE with a polyamide component and one of a number of compatibilizing compounds including those having both ethylenic unsaturation as well as a carboxylic acid or acid anhydride functionality, among others. In U.S. 4,339,376 a polyphenylene ether and polyamide is compatibilized with a copolymer comprised of units of a vinyl aromatic compound and an alpha, beta-unsaturated dicarboxylic acid anhydride, such as styrene-maleic anhydride copolymer. Other significant advancements in the art of providing compatibilized PPE-PA compositions can be found in U.S.4,600,741 (Aycock et al.) which utilizes a functional polyphenylene ether as the compatibilizing agent, and International Patent Publication Number WO85/05372 published December 5, 1985 which discloses the use of polycarboxylic acids as the compatibilizing agent for polyphenylene ether/polyamide compositions. The foregoing compatibilization systems are exemplary and others may be contemplated for use in the present invention. Each of the foregoing patents and applications is hereby incorporated by reference.

It is, therefore, an object of the present invention to provide polyphenylene ether molding compositions which exhibit improved adhesion to curable epoxy resin compounds. This object may be accomplished in accordance with the description and examples set forth below.

## Summary of the Invention

The improved polyphenylene molding composition in accordance with the present invention will be comprised of a polyphenylene ether base resin which may utilized per se or in combination with an alkenyl aromatic resin. As noted above, it is well-known that polyphenylene ether compositions are readily alloyable in all proportions with alkenyl aromatic polymers and a variety of useful products are attainable thereby. In preferred embodiments, approximately 10 to 100 weight percent polyphenylene ether can be combined with 0 to 90 percent of the alkylene aromatic resin composition to form a variety of conventional PPE molding compositions. The PPE will typically be a polymer or copolymer comprised primarily of 2,6-dimethyl phenylene units and or 2,3,6-trimethyl phenylene units. It is ordinarily preferred to utilize (poly 2,6-dimethyl-1,4-phenylene ether) as the basic polyphenylene ether resin.

The alkenyl aromatic resin is typically a polymer or copolymer comprised primarily of styrene or substituted styrene units such as chlorostyrene, bromostyrene, and the like. Polystyrene homopolymer as well as rubber-modified or high-impact polystyrene are particularly preferred for use in PPE molding compositions.

The present invention is practiced by combining the aforementioned PPE and/or alkylene aromatic resin components with a polyamide component effective for improving the adhesion of the molding composition towards the curable epoxy compounds. Varying degrees of improvement in adhesion can be found by utilizing different effective amounts of the polyamide component. Typically, however, at least one part by weight up to approximately 15 parts by weight of the polyamide component will be utilized per 100 parts by weight of the aforementioned PPE or PPE-alkenyl aromatic base resin. Preferably, about 3% to 10 parts by weight of the polyamide component additive will be utilized. Less than about one part by weight of the polyamide component will not ordinarily be effective for most electrical applications and conversely greater than about 15 parts by weight of the polyamide component will change the character of the molding composition without appreciably improving the adhesion to epoxy compounds to any significant degree.

The polyamide component can be selected within wide limits from any of the following polyamide polymers also known as nylons: polyamide 6, polyamide 6,6, polyamide 12, polyamide 4, polyamide 6,10, polyamide 6,9 and amorphous nylons.

It is preferred, however, that the polyamide component be one of the so called compatibilized PPE-polyamide compositions mentioned earlier. Better improvement in adhesion of the polyphenylene ether molding composition towards the epoxy resin can be achieved by utilizing these compatibilized PPE-polyamide products as the required additive.

The polyphenylene ether component of a compatibilized PPE-polyamide blend can be referred to as a second polyphenylene ether component in order to distinguish it from the first polyphenylene ether resin used as the base resin for the molding compositions of the present invention. In practice, it can be the same or different polyphenylene ether.

For electrical applications preferred embodiments of the present invention will contain flame retarding additives such as the triaryl phosphates which offer a dual advantage since they are also effective as a plasticizing agent. Preferred among these would be triisopropylphenyl phosphates, although many other flame retardants such as brominated or halogenated flame retardants may be utilized, with or without a separate plasticizing agent. Brominated polystyrene and poly bromostyrene flame retarding additives may also be utilized. Typically a plasticizer or flame retarding agent such as triarylphosphate will be utilized in an amount of 1 to 10 parts by weight based upon the weight of 100 parts of the resin composition. Fewer than one part will not typically show adequate effectiveness and greater than 10 parts will change the character of the composition without affording additional flame retarding or plasticizing benefit.

Electrical applications often require a degree modulus which can be attained with the addition of reinforcing additives. Preferred reinforcing agents include glass fibers such as those having an average length of approximately 0.3 to 0.6 mm. in the compounded molding composite, however, other reinforcing agents may be utilized such as mica, clay or talc.

The reinforcing agent will be present in an amount of approximately 5 to 40 parts by weight based upon the weight of 100 parts of the resin composition in preferred embodiments. Fewer than five parts by weight will not typically be effective for most electrical applications, whereas greater than 40 parts by weight can adversely effect properties of the composition.

Description of the Invention

Polyphenylene ethers are a well known class of compounds sometimes referred to as polyphenylene oxides. Examples of suitable polyphenylene ethers and processes for preparation can be found in U.S. Patent Nos. 3,306,876; 3,306,875; 3,256,357; and 3,257,358. Compositions of the present invention will encompass homopolymers, copolymers and graft copolymers obtained by the oxidative coupling of phenolic compounds. The preferred polyphenylene ethers used as base resins in compositions of the present invention will be comprised of units derived from 2,6-dimethyl phenol. Also contemplated are PPE copolymers comprised of units derived from 2,6-dimethyl phenol and 2,3,6-trimethyl phenol.

A particularly useful polyphenylene ether would be poly(2,6-dimethyl-1,4-polyphenylene ether) having an intrinsic viscosity (I.V.) greater than, approximately 0.10 dl/g as measured in chloroform at 25°C. The I.V. will typically be between 0.40 and 0.50 dl/g. PPE having high glass transition temperatures will ordinarily improve the stiffness of the resin compositions.

The alkenyl aromatic polymers suitable for blending with the polyphenylene ethers to provide thermoplastic molding compositions are polymers of copolymers comprised primarily of styrene units including the various substituted styrenes. Many grades are commercially available. For many applications, rubber modified polystyrene also known as high impact polystyrene is particularly preferred.

The polyamide resins useful in the practice of the present invention are a generic family of resins known as nylons, characterized by the presence of an amide group (-CONH-). Nylon-6 and nylon-6,6 are the generally preferred polyamides and are available from a variety of commercial sources. Other polyamides, however, such as nylon-4, nylon-12, nylon-6,10, nylon-6,9 or others such as the amorphous nylons may be useful for particular polyphenylene ether-polyamide applications.

The polyamides can be provided by a number of well known processes. Nylon-6, for example, is a polymerization product of caprolactam. Nylon-6,6 is a condensation product of adipic acid and hexamethylenediamine. Preferred polyamides will typically have a relative viscosity of at least 35, in accordance with ASTM Test Method D789.

As noted above the preferred polyamide component for use in the molding compositions of the present invention will be a compatibilized polyphenylene ether-polyamide resin blend (PPE-PA). Within the ranges described above for the polyamide component additive, the amount of the compatibilized PPE-PA which can be used as the polyamide component additve will depend upon the ratio of PPE to polyamide in the compatibilized PPE-PA blend. It will be understood that the amount of the first polyphenylene ether in the formulation (i.e. the base resin for the molding composition) can be reduced by a like amount of the second polyphenylene ether provided by the compatibilized PPE-PA product.

Thus if a molding composition had the general formulation of 40 parts polyphenylene ether and 60 parts high impact polystyrene, it might be desirable to incorporate 5 parts of a polyamide component in accordance with the invention. The polyamide component in this example could be provided by incorporating 5 parts of a polyamide such as nylon 6. Alternatively, 10 parts of a compatibilized PPE-PA resin blend having a PPE:PA ratio of approximately 50:50, could be used. In such a circumstance it would be desirable to reduce the amount of the first polyphenylene ether in the molding composition formulation from about 40 parts to about 35 parts by weight in order to preserve the original 40:60 ratio of PPE to alkenyl aromatic polymer. Those skilled in the art will be able to adjust these formulations within wide ranges to provide a variety of improved molding compositions.

The compatibilized PPE-PA resins which may be used as the additive in composition of the present invention will typically require the use of a compatibilizing agent. As used herein, the expression, "compatibilizing agent" refers to polyfunctional, compounds which interact with either the polyphenylene ether, the polyamide or both. This interaction may be chemical (e.g. grafting) physical (e.g. affecting the surface characteristics of the dispersed phases). In either instance the resulting polyphenylene ether-polyamide composition appears to exhibit improved compatibility, particularly as evidence by enhanced impact strength, weld plane strength and/or elongation.

Many suitable compatibilizing agents are well known for polyphenylene ether-polyamide compositions. Among these compatibilizing agents may be mentioned: liquid diene polymers, epoxy compounds, quinones, oxidized polyolefin waxes, organosilane compounds, and certain polyfunctional organic acids. Suitable compatibilized polyphenylene ether-polyamide compositions can be provided in the manner taught by the patents and publications discussed above.

Suitable compatibilized PPE-PA resins are available commercially such as those designated Noryl GTX resin, manufactured by General Electric Company.

The requisite components of the molding composition can be blended by conventional means. Compounding of the blend under the temperature, pressure and shear conditions of a single or twin screw extruder will provide compounded extrudate which can be quenched and pelletized to provide the improved molding composition of the present invention in convenient form.

The invention is illustrated, without limitation, by the following examples:

Examples 1 to 3

Each of the molding compositions described in Table 1 below were compounded on a 28 mm Werner Pfleiderer twin screw extruder at 570°F and were thereafter molded into ASTM test specimens using a 4 oz. Newberry Injection Molding Machine. The test specimens were tested for the physical properties specified in Table 2 and were also tested for adhesive strength by employing a lap-shear test procedure. The epoxy resin used in the lap-shear test was 100 parts by weight of Hardman epoxy resin number 16358A and 70 parts by weight of curing agent number 16358B manufactured by Hardman Inc. The epoxy resin was preheated for two minutes at 90°C and and thereafter cured for two hours at 105°C. Small amounts of Cab-O-Sil fumed silica were incorporated into the epoxy resin to make it more thixotropic and thereby avoid resin starved lap-shear joints. ASTM tensile bars of the polyphenylene ether molding composition of the invention were cut in half and used as the plastic substrate. A 1/4" overlap was chosen for the test. Table 2 lists the test results for the lap shear test which were compared side by side with the control composition. The other physical properties listed in Table 2 are self-explanatory.

Regarding the results for the lap-shear bond strength, it is apparent that incorporation of five parts by weight of Nylon 6 results in only slight improvement in bond strength compared to the control. However, incorporation of ten parts by weight of a compatibilized PPE-polyamide coupled with the reduction of five parts by weight of PPE from the formulation of the base resin gives a relatively high bond strength as shown in Example Number 2. Furthermore, significant improvement can be achieved when the amount of the triarylphosphate is slightly upgraded compared to the previously described compositions. Additionally, it can be seen in Sample 3 that the mode of failure changes from adhesive failure (i.e. at the interfacial boundary to cohesive failure (i.e. failure in one of the substrates) indicating a greatly increased degree of adhesion in the composition of the invention.

5

TABLE 1

| COMPOSITION (pbw) | Control | EXAMPLES | | |
|---|---|---|---|---|
| | | 1 | 2 | 3 |
| PPE[a] | 49 | 49 | 44 | 44 |
| HIPS[b] | 25 | 25 | 25 | 25 |
| TRIARYL PHOSPHATE[c] | 6 | 6 | 6 | 7 |
| GLASS FIBERS[d] | 20 | 20 | 20 | 20 |
| POLYAMIDE COMPONENT[e] | -- | 5 | -- | -- |
| PPE/PA COMPONENT[f] | -- | -- | 10 | 10 |

Notes:

(a) poly(2,6-dimethyl-1,4-phenylene ether) having an intrinsic viscosity of approximately 0.40 dl/gm as measured in chloroform at 25°C

(b) high impact polystyrene, Huntsman 1897

(c) tri(isopropyl phenyl) phosphate, Kronitex 50, FMC, Inc.

(d) fiber glass No 715, Manville Corp.

(e) Polyamide Component: Nylon 6, Nylon Polymers, Inc.

(f) NORYL GTX 910, General Electric Company, compatibilized polyphenylene ether-polyamide resin composition, approximate PPE:PA weight ratio 50:50

6

## TABLE 2

| PROPERTIES | CONTROL | EXAMPLES | | |
| --- | --- | --- | --- | --- |
| | | 1 | 2 | 3 |
| Tensile Str.(psi) | 10,300 | 9,600 | 8,700 | 9,100 |
| Elongation (%) | 5.9 | 7.2 | 7.8 | 7.6 |
| Flexural Str. (psi) | 17,200 | 17,500 | 16,400 | 15,300 |
| Flexural Modulus (psi) | 722,000 | 732,000 | 741,000 | 695,000 |
| Izod Impact Str. (ft.lb./in.n.) | 1.0 | 1.1 | 1.1 | 1.0 |
| Dynatup Impact Str. (in-lbs) | 109 | 141 | 122 | 139 |
| DTUL (°F) | 255° | 257° | 258° | 249° |
| Channel Flow at 580°F and 10,000 psi (in) | 18" | 20" | 19" | 18" |
| UL SUBJECT 94** | | | | |
| 1/16" | VI(11.6) | VI(13.8) | VI(12.4) | VI(8.9) |
| 1/8" | VO(4.7) | FAILS | VI(8.4) | VI(5.5) |
| LAP-SHEAR STR. (psi) | 1281* | 1437* | 2016* | more than 2229* |
| MODE OF FAILURE | ADHESIVE | ADHESIVE | ADHESIVE | COHESIVE |

\* Average of Five Test Results

\*\* Values In Parenthenthesis – Average Burning Time (Seconds)

Claims

1. A polyphenylene ether composition which provides a molded article having improved adhesion to epoxy resins, comprising:

a. 100 parts by weight of a polyphenylene ether resin or a polyphenylene ether-polyalkenyl aromatic resin;

b. 1 to 15 parts by weight per 100 parts of component a. of a polyamide component additive for improving the adhesion of said polyphenylene ether resin (a.) to epoxy compounds, the polyamide component comprising

(i) a polyamide selected from the group consisting of polyamide 6, polyamide 6,6, polyamide 12, polyamide 6,10 and amorphous nylons; or

(ii) a compatibilized blend of a polyamide and a second polyphenylene ether resin.

2. A composition as in Claim 1 wherein said polyphenylene ether is a polymer or copolymer comprised primarily of 2,6-dimethyl phenyl units and 2,3,6-trimethyl phenylene units.

3. A composition as in Claim 2 wherein said polyphenylene ether is primarily poly(2,6-dimethyl-1,4-phenylene ether).

4. A composition as in Claim 1 wherein said polyalkenyl aromatic resin is a polymer or copolymer comprised primarily of styrene and substituted styrene units.

5. A composition as in Claim 4 wherein said alkenyl aromatic resin is high impact polystyrene.

6. A composition as in Claim 1 further comprising a plasticizing amount of a plasticizing agent.

7. A composition as in Claim 6 wherein said plasticizing agent is selected from the group consisting of triaryl phosphates.

8. A composition as in Claim 6 wherein said plasticizer is present in an amount of approximately 1 to 20 parts by weight based upon the weight of 100 parts of the resin composition.

9. A composition as in Claim 7 wherein said plasticizing agent is tri(isopropyl phenyl) phosphate.

10. A composition as in Claim 1 further comprising a reinforcing amount of a reinforcing agent.

11. A composition as in Claim 10 wherein said reinforcing agent is selected from the group consisting of glass fibers, mica, clay or talc.

12. A composition as in Claim 10 wherein said reinforcing agent is presenting an amount of approximately 5 to 40 parts by weight based upon the weight of 100 parts of the resin composition.

13. A composition as in Claim 10 wherein said reinforcing agent is glass fiber having an average length of approximately 0.3 to 0.6 mm. in a compounded molding material.

14. A method for improving the adhesion of a polyphenylene ether molding composition to a curable epoxy resin comprising the steps:

compounding in an extruder 100 parts by weight of a polyphenylene ether resin or a polyphenylene ether-alkenyl aromatic resin blend and 3 to 10 parts by weight of a polyamide component comprising a polyamide resin or a compatibilized polyphenylene ether-polyamide blend, thereby forming a thermoplastic extrudate;

quenching the extrudate with water and directing it to a pelletizing the quenched extrudate thereby providing a polyphenylene ether molding composition.

15. A method as in claim 1 further comprising the step of molding said polyphenylene ether molding composition.